Europäisches Patentamt

European Patent Office

Office européen des brevets

(11) Numéro de publication: **0 456 026 A1**

## (12) DEMANDE DE BREVET EUROPEEN

(21) Numéro de dépôt: **91106458.2**

(51) Int. Cl.⁵: **G02B 6/30**

(22) Date de dépôt: **22.04.91**

(30) Priorité: **27.04.90 FR 9005407**

(43) Date de publication de la demande:
**13.11.91 Bulletin 91/46**

(84) Etats contractants désignés:
**CH DE FR GB IT LI NL**

(71) Demandeur: **ALCATEL FIBRES OPTIQUES**
**35 rue Jean Jaurès, BP 20**
**F-95871 Bezons Cedex(FR)**

(72) Inventeur: **Hakoun, Roland**
**4 Place Raspail**
**F-95330 Domont(FR)**
Inventeur: **Tanguy, Eric**
**81, rue Blomet**
**F-75015 Paris(FR)**

(74) Mandataire: **Weinmiller, Jürgen et al**
**Lennéstrasse 9 Postfach 24**
**W-8133 Feldafing(DE)**

(54) **Dispositif optique à composant d'optique intégrée et procédé de fabrication.**

(57) Le dispositif optique est caractérisé en ce qu'il comporte un premier élément d'aboutage (5) de deux fibres (6A, 6B) à deux guides de sortie (4A, 4B) en optique intégrée du substrat en verre (1) et en ce que ces deux fibres sont montées jointives en nappe (6), elle-même scellée entre deux plaquettes de verre (5A, 5B), et en ce que les deux guides correspondants (4A, 4B) sont formés avec un entraxe égal au diamètre de ces fibres, ce premier élément (5) avec ses fibres et un deuxième élément d'aboutage (7) d'une autre fibre (8) au guide d'entrée (3) étant scellés contre ledit substrat (1).
Application : transmission optique

## FIG. 1

La présente invention porte sur des dispositifs optiques, tels que coupleurs, du type de ceux comportant un composant d'optique intégrée sur lequel sont aboutées des fibres optiques.

De manière connue, la technique dite d'optique intégrée permet la création de guides d'ondes dans un substrat diélectrique, en général en verre, par augmentation locale de l'indice de réfraction du verre. Elle utilise des procédés de diffusion d'ions dans le substrat ou de dépôts de couches d'indice de réfraction supérieur à celui du substrat pour la création de ces guides d'ondes.

Ces composants d'optique intégrée sont de plus en plus utilisés dans les domaines de transmission utilisant des fibres optiques. Ils sont obtenus avec des dimensions réduites, avec leurs guides d'ondes séparés par des entraxes très faibles et pouvant constituer différentes structures de coupleurs. Ces différentes structures de coupleurs sont notamment des coupleurs en Y, à branche commune dite d'entrée à laquelle sont réunies deux branches dites de sortie, présentant entre elles un très faible angle de jonction. Ce sont aussi par exemple des coupleurs à proximité, à deux guides d'ondes ayant au moins leur partie centrale très rapprochée, ou d'autres types de coupleurs également en tant que tels connus.

Le principal problème rencontré dans l'utilisation industrielle de ces composants d'optique intégrée est la précision d'alignement requise des fibres optiques par rapport aux guides d'ondes du substrat. Cette précision est de l'ordre du micron et moins. Elle s'avère délicate à obtenir du fait du manque de tenue des fibres optiques. Son obtention est en outre rendue d'autant plus délicate que l'entraxe entre les extrémités des fibres est faible et ne laisse pas ou que peu de liberté de réglage final par micromanipulation des fibres.

Aussi, de manière courante, les guides d'ondes d'optique intégrée sont formés sur le substrat en verre avec leurs extrémités suffisamment écartées les unes des autres pour permettre une manipulation des fibres individuelles face aux guides et leur scellement aisé au substrat.

En outre, pour assurer une tenue mécanique des fibres lors de leur positionement face aux guides, suivi d'un éventuel réglage final par micromanipulation, avant leur scellement au substrat, on connaît notamment par les documents FR-A-2 574 950 et FR-A-2 612 302 des composants d'optique intégrée dont le substrat en verre comporte les guides d'ondes qui y sont formés mais également des rainures de positionnement des fibres. Ces rainures et les guides sont alignés le plus rigoureusement possible. Les rainures sont, selon ces documents, issus de moulage avec le substrat et les guides formés ultérieurement sur le substrat. Ce mode de réalisation est long et délicat. Il nécessite un réglage par micromanipulation pour l'aboutage fibre après fibre face aux différents guides.

On connaît également par le document EP-A-0283 301 un élément d'aboutage de fibres aux extrémités des guides, constitué par deux plaques à rainures en vis-à-vis dans lesquelles sont maintenues les fibres. Chaque fibre est dénudée et a l'une de ses extrémités dans le plan de la face frontale de l'élément. Cette extrémité est fixée en bout de l'un des guides avec la fixation de l'élément contre le substrat. En variante les fibres gainées sont maintenues dans l'élément d'aboutage, avec l'une de leurs extrémités dénudée laissée légèrement saillante sur l'élément qui est scellée en bout du guide avec la fixation de l'élément au substrat.

La présente invention a pour but l'obtention plus simple et moins coûteuse de dispositifs optiques à composant d'optique intégrée auquel les fibres sont aboutées en présentant en particulier une tenue mécanique à la traction nettement améliorée.

La présente invention a pour objet un dispositif optique comportant un composant d'optique intégrée, à substrat en verre sensiblement parallélépipédique présentant des guides d'ondes en optique intégrée, définissant entre eux un coupleur ayant des premières extrémités desdits guides sur l'une des faces latérales du substrat et au moins une deuxième extrémité des guides sur la face latérale opposée, et comportant, en outre, un premier élément d'aboutage de premières fibres optiques aux premières extrémités des guides et un deuxième élément d'aboutage d'une deuxième fibre optique à chaque deuxième extrémité, scellés l'un et l'autre contre ledit substrat, ledit premier élément d'aboutage étant constitué par deux plaquettes en verre de maintien entre elles desdites premières fibres, avec un entraxe entre lesdites premières fibres sensiblement égal à celui entre les premières extrémités des guides, caractérisé en ce que les guides d'ondes ont au moins au niveau desdites premières extrémités un entraxe sensiblement égal au diamètre desdites premières fibres gainées et en ce que lesdites premières fibres gainées forment une nappe à fibres jointives dans ledit premier élément d'aboutage.

En particulier, les faces internes des plaquettes sont planes. En outre, le deuxième élément d'aboutage est identique au premier ou constituée par une pièce percée d'un canal dans lequel est insérée et fixée l'extrémité dénudée de la deuxième fibre.

La présente invention a également pour objet un procédé de fabrication de ce dispositif optique, caractérisé en ce qu'il consiste à :
- former lesdits guides d'ondes sur ledit substrat en verre, avec un entraxe entre lesdites premières extrémités des guides égal au diamètre des premières fibres gainées,
- à assembler les premières fibres gainées de
  manière jointive à l'aide d'une colle, pour
  former une nappe,
- à sceller les deux plaquettes en verre de part
  et d'autre de la nappe à l'aide de colle répartie sur une zone de scellement interne excluant le bout de la nappe affleurant à niveau
  sur les bords d'interface ainsi que la partie
  attenante aux bords d'interface.

Les caractéristiques et avantages de la présente invention ressortiront de la description ci-après
d'un mode de réalisation donné à titre d'exemple
et illustré dans les dessins ci-annexés. Dans ces
dessins :
- la figure 1 est une vue schématique de dessus du dispositif selon l'invention,
- la figure 2 est une vue en élévation du dispositif de la figure 1,
- la figure 3 est une vue de dessus à échelle
  agrandie de l'un des éléments du dispositif
  de la figure 1,
- la figure 4 est une vue en coupe selon la
  ligne IV-IV de la figure 3 de cet élément.

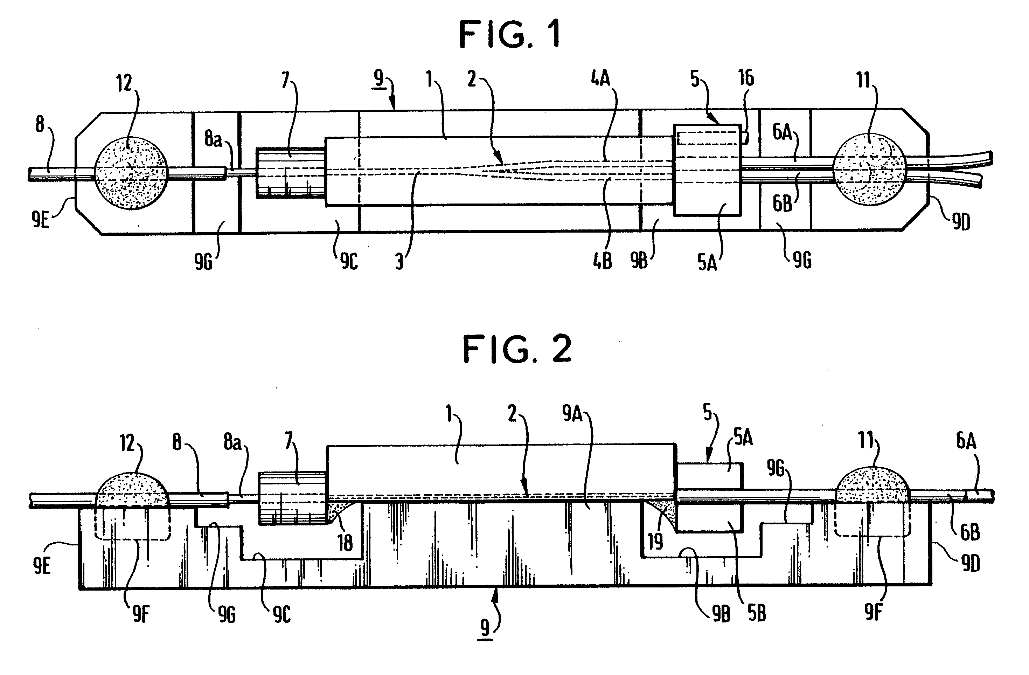

En regard de la figure 1 et/ou de la figure 2, on
voit que le dispositif optique selon l'invention ou
coupleur optique comporte essentiellement :
- un substrat en verre 1, ayant des guides
  d'ondes en optique intégrée désignés sous la
  référence globale 2 et constituant dans
  l'exemple illustré un coupleur en Y présentant
  une branche commune 3, dite guide d'entrée,
  à laquelle sont réunies ensemble deux autres
  branches 4A, 4B dites guides de sortie, les
  extrémités de ces guides de part et d'autre
  de leur jonction étant sur l'une et l'autre des
  deux petites faces latérales du substrat 1,
- un premier élément 5 d'assemblage et de
  maintien de deux fibres optiques 6A, 6B, qui
  est rapporté contre la petite face latérale du
  substrat, du côté des guides de sortie 4A,
  4B, et scellé au substrat 1, avec ses deux
  fibres alignées en bout de ces deux guides
  de sortie, respectivement,
- un deuxième élément 7 de maintien d'une
  autre fibre optique 8, qui est rapporté contre
  l'autre petite face latérale du substrat et scellé au substrat, avec sa fibre 8 alignée en bout
  du guide d'entrée 3, et
- une pièce support 9, de préférence métallique et en Invar, sur laquelle est monté et
  collé le substrat 1 avec ses éléments latéraux
  5, 7 de maintien des fibres, et sur laquelle
  sont collées des fibres, de part et d'autre du
  substrat et des éléments latéraux, au voisinage des extrémités de cette pièce, en des
  zones 11 et 12, de quelques millimètres.

Sur le substrat en verre 1, les guides de sortie
3A, 3B font un angle très faible entre eux, de
l'ordre du degré ou de quelques degrés, au niveau
de leur jonction avec le guide d'entrée. Ils sont en
outre formés avec leurs extrémités respectives
aboutissant sur la petite face latérale du substrat et
présentant entre elles un entraxe égal au dismètre
des fibres optiques gainées qui leur sont raccordées. Cet entraxe est de 250 microns pour les
fibres 6A, 6B de dismètre de revêtement de 250
microns.

Le premier élément 5 avec ses fibres 6A, 6B
assure le maintien de ces deux fibres assemblées
en nappe. Sa réalisation est précisée en se référant
à la figure 1 ou 2 mais plus particulièrement à la

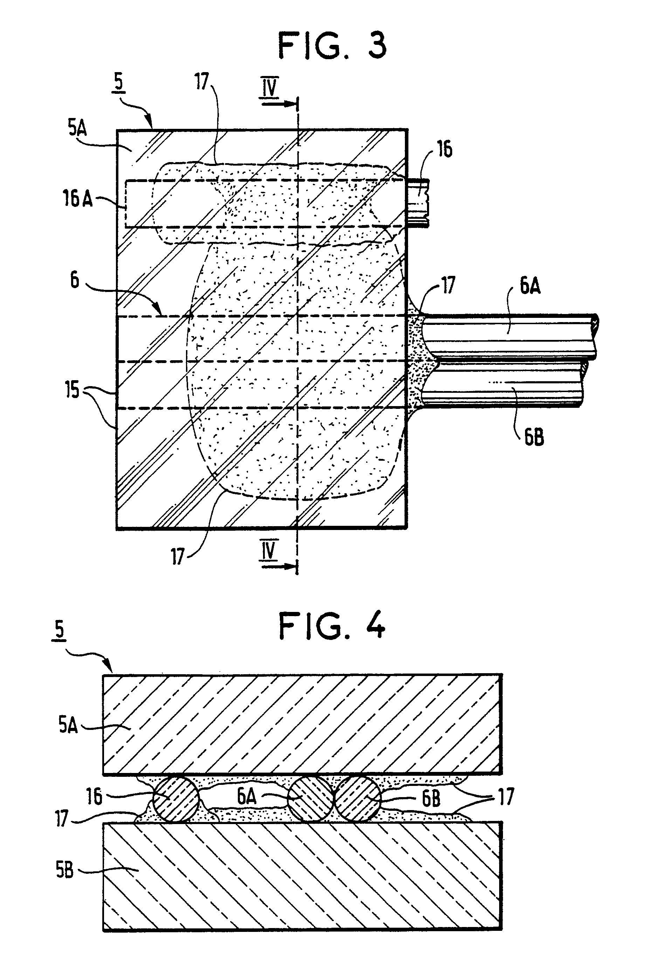

figure 3 et/ou la figure 4.

Pour la constitution de la nappe désignée par
6, les deux fibres gainées 6A et 6B sont initialement collées de façon jointive à l'aide d'un filet de
résine polymérisable aux ultrat-violets déposé entre
elles sur leur revêtement en résine. L'extrémité de
la nappe ainsi obtenue est de préférence sectionnée à l'aide d'une pince de coupe convenable,
pour l'obtention d'une nouvelle extrémité, très propre et en particulier exempte de toute colle en bout
des fibres.

Cette nappe est alors collée entre deux plaquettes de verre 5A, 5B, à l'aide du même type de
colle que précédemment : cette opération est faite
en prenant soin que l'extrémité de la nappe soit
parfaitement à niveau avec deux des bords en
regard de l'une et l'autre des plaquettes définissant
les bords d'interface de raccordement, et ne reçoive pas de colle. Cette extrémité est éventuellement
rectifiée et ainsi dite ci-après. Comme représenté
dans la figure 3, l'extrémité rectifiée de la nappe 6
affleure en 15 sur les bords d'interface de raccordement précités, et le collage de la nappe entre les
plaquettes est réparti entre les plaques, de part et
d'autre de la nappe, sur une large zone 17, excluant la partie attenante aux bords d'interface
comme l'extrémité rectifiée de la nappe 6.

Pour cet assemblage, une fibre supplémentaire
16 dite fibre cale est montée indépendamment et
décalée des fibres de la nappe 6 et est collée
comme elle entre les plaquettes de verre. L'extrémité 16A de cette fibre cale 16 est laissée en léger
retrait sur les bords d'interface des plaquettes et
est exempte de colle. Cette fibre cale 16 est de
préférence collée à l'une des plaquettes avant la
nappe 6.

Dans les figures 1 et 2, le deuxième élément 7
assure la tenue de la fibre unique 8 aboutée au
guide d'entrée 3. Il est constitué par un petit pavé
ou tube appelé férule et percé d'un canal non
référencé. La fibre 8 a son extrémité 8a dénudée
qui est enfilée puis collée dans la férule, son extrémité affleurant la face latérale servant d'interface et étant exempte de colle.

En variante, ce deuxième élément pourrait être constitué comme l'élément 5, avec la fibre 8 remplaçant la nappe 6 précitée entre deux plaquettes en verre et restant alors recouverte de son revêtement en résine.

Le montage des deux éléments à un bout et l'autre du substrat est assuré à l'aide de pinces montées sur déplacements micrométriques permettant, après un positionnement initial des fibres en alignement approximatif avec les guides individuels, le réglage final en position avec la précision requise. Un contrôle du flux optique depuis la fibre 8 aux fibres 6A, 6B, à travers les guides d'ondes 2, permet de détecter le couplage optimal et donc le positionnement optimal. Une fois ce réglage obtenu, les éléments 5 et 7 sont scellés au substrat à l'aide de colle polymérisable, ainsi qu'illustré en 18 et 19, entre leurs faces en contact et sur les bords du substrat 1.

Cet ensemble formé par le composant d'optique intégrée 1 et les éléments 5 et 7 avec leurs fibres est ensuite monté et collé sur la pièce support 9 convenablement usinée préalablement.

Cette pièce support 9 a sa partie centrale 9A présentant un méplat sur lequel repose le substrat en verre 1. De préférence ce substrat est collé sur le méplat pour éviter tout risque de vibrations ultérieures. Avantageusement aussi, comme montré dans la figure 2, le substrat est monté avec sa face dans laquelle sont formés les guides d'ondes 2 appliquée contre le méplat, pour éviter que les éléments 5 et 7 se présentent saillants au dessus du coupleur résultant.

De part et d'autre du méplat central 9A, cette pièce support 9 présente deux échancrures 9B, 9C dans lesquelles viennent se loger sans contact avec les bords des échancrures les éléments 5 et 7. Les deux extrémités 9D, 9E de cette pièce support 9, sont légèrement rectifiées en hauteur par rapport au niveau du méplat central 9A, pour définir des surfaces d'appui pour les deux fibres 6A, 6B en nappe et la fibre 8. Elles présentent l'une et l'autre une cavité centrale 9F recevant la colle de scellement de la fibre ou des fibres en nappe concernées. Cette colle s'infiltre dans la cavité et forme un dôme au dessus de la ou des fibres ; elle les rend prisonnières dans de la résine dure et assure ainsi un bon maintien des fibres de part et d'autre du substrat et des éléments 5 et 7.

Cette même pièce support 9 a en outre des parties intermédiaires épaulées telles que 9G, entre chacune de ses extrémités et l'échancrure pour l'élément 5 ou 7, pour une bonne tenue mécanique.

Le coupleur résultant est de réalisation nettement simplifiée et rendue peu coûteuse. Il présente une excellente tenue mécanique à la traction et avec des conditions environnantes variables et est à très faibles pertes de la liaison fibres/guides d'ondes réalisée.

## Revendications

1. Dispositif optique comportant un composant d'optique intégrée, à substrat en verre sensiblement parallélépipédique présentant des guides d'ondes en optique intégrée, définissant entre eux un coupleur ayant des premières extrémités desdits guides sur l'une des faces latérales du substrat et au moins une deuxième extrémité des guides sur la face latérale opposée, et comportant, en outre, un premier élément d'aboutage de premières fibres optiques aux premières extrémités des guides et un deuxième élément d'aboutage d'une deuxième fibre optique à chaque deuxième extrémité, scellés l'un et l'autre contre ledit substrat, ledit premier élément d'aboutage (5) étant constitué par deux plaquettes en verre (5A, 5B) de maintien entre elles desdites premières fibres (6A, 6B), avec un entraxe entre lesdites premières fibres sensiblement égal à celui entre les premières extrémités des guides (4A, 4B), caractérisé en ce que les guides d'ondes (4A, 4B) ont au moins au niveau desdites premières extrémités un entraxe sensiblement égal au diamètre desdites premières fibres gainées (6A, 6B) et en ce que lesdites premières fibres gainées forment une nappe à fibres jointives dans ledit premier élément d'aboutage (5).

2. Dispositif optique selon la revendication 1, caractérisé en ce que les faces internes des plaquettes dudit premier élément d'aboutage (5) sont planes.

3. Dispositif optique selon l'une des revendications 1 et 2, caractérisé en ce qu'il comporte en outre une pièce support (9) présentant un méplat central (9A) sur lequel est monté ledit substrat (1) et deux extrémités (9D, 9E) sur lesquelles reposent et sont scellées lesdites fibres optiques (6A, 6B, 8) de part et d'autre des premier et deuxième éléments d'aboutage (5, 7).

4. Dispositif optique selon la revendication 3, caractérisé en ce que les extrémités de la pièce support présentent l'une et l'autre une cavité (9F) de réception de colle de scellement des fibres sur une zone (11, 12) de quelques millimètres.

5. Dispositif optique selon l'une des revendications 3 et 4, caractérisé en ce que ladite pièce support (9) présente deux échancrures (9B, 9C) de part et d'autre dudit méplat central (9A), pour le logement sans contact des premier et deuxième éléments d'aboutage.

6. Dispositif optique selon l'une des revendications 1 à 5, caractérisé en ce que ledit deuxième élément (7) est constitué par un pavé ou tube en verre, percé de part en part d'un canal dans lequel l'extrémité dénudée de la deuxième fibre (8) alors unique est enfilée et maintenue, et scellé contre le substrat lors de l'alignement de ladite deuxième fibre avec la deuxième extrémité correspondante des guides.

7. Dispositif optique selon l'une des revendications 1 à 5, caractérisé en ce que ledit deuxième élément (7) est constitué comme le premier élément (5) pour le maintien de chaque deuxième fibre avec leur revêtement.

8. Procédé de fabrication du dispositif optique selon l'une des revendications 1 à 7, caractérisé en ce qu'il consiste à :
   - former lesdits guides d'ondes sur ledit substrat en verre, avec un entraxe entre lesdites premières extrémités des guides égal au diamètre des premières fibres gainées,
   - à assembler les premières fibres gainées (6A, 6B), de manière jointive à l'aide d'une colle, pour former une nappe (6),
   - à sceller les deux plaquettes en verre (5A, 5B) de part et d'autre de la nappe (6) à l'aide de colle répartie sur une zone de scellement interne (17) excluant le bout de la nappe (6) affleurant sensiblement à niveau (15) sur chacun des bords dits d'interface avec le substrat ainsi que la partie attenante aux bords d'interface.

9. Procédé selon la revendication 8, caractérisé en ce qu'il consiste à disposer une fibre cale (16) entre lesdites plaquettes avec ladite nappe, la fibre cale étant décalée de la nappe et présentant son extrémité en retrait sur les bords d'interface des plaquettes et exempte de toute colle.

10. Procédé selon l'une des revendications 8 et 9, caractérisé en ce qu'il consiste à sectionner l'extrémité de la nappe constituée (6) avant son montage et scellement entre lesdites plaquettes, pour qu'elle présente une nouvelle extrémité exempte de colle et rectifiée.

11. Procédé selon la revendication 10, caractérisé en ce qu'il consiste à prépositionner le premier et le deuxième élément d'aboutage contre le substrat avec leurs fibres en alignement approximatif avec les extrémités des guides, et à les régler en position précise par contrôle du flux maximal à travers lesdites fibres et lesdits guides, avant scellement desdits premier et deuxième éléments d'aboutage audit substrat.

# FIG. 1

# FIG. 2

EP 0 456 026 A1

# FIG. 3

# FIG. 4

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X,D | EP-A-0 283 301 (FUJITSU) <br> * Figures 16-18,28,33,34; colonne 8, lignes 28-65; colonne 9, lignes 1-53; colonne 13, lignes 64-65; colonne 14, lignes 1-49; revendications * | 1,8 | G 02 B 6/30 |
| A | | 6,7,10,11 | |
| | – – – | | |
| A | PATENT ABSTRACTS OF JAPAN, vol. 14, no. 158 (P-1027)[4101], 27 mars 1990; <br> & JP-A-2 15 204 (NIT) 18-01-1990 <br> * En entier * | 1,3 | |
| | – – – | | |
| A | PATENT ABSTRACTS OF JAPAN, vol. 6, no. 104 (P-122)[982], 15 juin 1982; <br> & JP-A-57 35 820 (SHIMAZU SEISAKUSHO) 26-02-1982 <br> * En entier * | 1,5 | |
| | – – – | | |
| A | US-A-4 647 147 (J.I. PIKULSKI et al.) <br> * En entier * | 1,8 | |
| | – – – – – | | |

| | DOMAINES TECHNIQUES RECHERCHES (Int. Cl.5) |
|---|---|
| | G 02 B 6/00 |

Le présent rapport de recherche a été établi pour toutes les revendications

| Lieu de la recherche | Date d'achèvement de la recherche | Examinateur |
|---|---|---|
| La Haye | 01 août 91 | MATHYSSEK K. |